# EUROPEAN PATENT APPLICATION

(11) **EP 0 729 090 A1**
(43) Date of publication of application: **28.08.1996**
(21) Application number: 95200021.4
(22) Date of filing: 06.01.1995
(51) Int. Cl.: G06F 3/12

(54) **Printing device**

(71) Applicant: Océ-Nederland B.V., NL-5914 CC Venlo (NL)
(72) Inventor: Geelen, Johannes Franciscus Maria Elisabeth, 5991 AV BAARLO (NL)
(74) Representative: Hanneman, Henri W.A.M.

(57) **Abstract**

A printing device comprising a print server (10) connected to an operating unit (16) for inputting commands, and a number of print units (14) for printing data, wherein the print server is adapted to receive and store data of at least one print job supplied from a host (12), and wherein the operating unit (16) is arranged for splitting the print job into a number of sub-jobs which can individually be supplied to predetermined print units or groups of print units.

## Description

The invention relates to a printing device comprising a print server connected to an operating unit for inputting commands, and a number of print units for printing data, wherein the print server is adapted to receive data of at least one print job supplied from a host, as well as a method of operating such a printing device and to a print server for a printing system as well as a method of operating such a print server.

US-A-5 287 194 discloses a printing device of this type, wherein the user can enter a completion time at which the print job should be completed, and a scheduler is provided for distributing the job to the printing units such that, if possible, the job will be completed in time. With this device, it is also possible to send the data to a plurality of remote print locations, and the user may specify the print locations where the job is desired to be printed as well as the number of copies to be made. The selected print units will in any case produce one or more complete copies of the whole job.

US-A-5 179 637 discloses a system for distributing print jobs among a set of print units and associated image processors, wherein the encoded data of a print job are transferred to one of the image processors that is not busy, and the data are processed to develop a set of print engine operating data files representing print images or pages comprising a complete print job, together with data indicating the number of copies of each such image or page to be printed and the medium on which it is to be printed, and then the print engine operating data files are automatically distributed among the free print engines.

In general, a print job consists of data which, from the viewpoint of the user, form a logical entity, so that it is desirable to keep them together in the form of a single job. Nevertheless, these data may be composed of a number of segments which are intended for different purposes, and it may therefore be necessary that the printed copies of the job are split-up into several parts which are then delivered to different destinations. For example, if a company wishes to deliver a brochure via a plurality of district branches, the brochure will frequently contain data which are pertinent only to the specific district, so that each branch should obtain a slightly modified version of the brochure. Then, it will be desirable for administrative purposes that the whole brochure including all its modifications can be treated as a single job, but on the other hand it has to be made sure that each district branch will receive its proper version.

It is accordingly an object of the invention to provide a printing device and a method of operating the same as well as to provide a print server and a method of operating the same which facilitate the delivery of copies of various parts of the print job to the appropriate destinations.

According to the invention, this object is achieved by a printing device according to the preamble of claim 1 which is characterized in that the operating unit is arranged for inputting commands for splitting the print job into a number of sub-jobs which can individually be supplied to predetermined print units or groups of print units.

A method of operating such a printing device in accordance with the invention generally comprises the steps of:
- inputting commands, by which the print job is split into a number of sub-jobs, via the operating unit; and
- designating for at least one of the sub-jobs a print unit or a group of print units where the sub-job is to be printed.

The object of the invention is also achieved by a printer server according to claim 7 which is characterized in that the print 10 server comprises a job splitting unit 22 that is arranged to detect within the data of one job criteria on which the data is split up into a number of sub-jobs.

A method of operating such a print server generally comprises the steps of
- detecting in the data of one job criteria at specific positions within the data stream, and
- splitting up the job into a number of sub jobs on detection of these criteria.

Thus, the job may be structured in accordance with the logical structure of the copy distribution system so that copies intended for different addressees will be printed by different print units, so that they may readily be delivered without the risk of confusion, and it is no longer necessary that the sets of printed copies are split-up manually. On the other hand, the job as a whole can still be accessed and handled as a single unit. As a result, operations to be performed on the whole job, such as assembling, editing, filing, storing, transmitting to remote locations, billing the copying costs and the like, can be effected much easier than it would be the case if the different parts were treated as separate jobs from the outset.

More specific features of the invention are indicated in the dependent claims.

The objects, features and advantages of the invention will be fully understood from the detailed description of preferred embodiments given hereinbelow in conjunction with the accompanying drawings, wherein:
Fig. 1 is a block diagram of a printing device embodying the invention;
Fig. 2 is a block diagram of a modified embodiment of the printing device;
Fig. 3 is a diagram of a complex printing system;
Fig. 4 illustrates a data sequence representing a first print job and the leading part of a second print job;
Figs. 5 to 8 are simplified views of a display screen and operating buttons associated therewith, and illustrate different display images occurring during a command input procedure;
Fig. 9A shows the data sequence of Fig. 4 after the first job has been split into two sub-jobs;
Figs. 9B and 9C show data sequences of the sub-jobs to be supplied to different print units;
Fig. 10A shows the data sequence of Fig. 4 after it has been divided into sub-jobs in a different manner;
Figs. 10B and 10C show the data sequences of the sub-jobs in Fig. 10A as they are supplied to the print units;
Figs. 11A and 11B show another example of two sub-jobs to be supplied to the print units; and
Figs. 12-14 illustrate images displayed on a display to define splitting criteria.

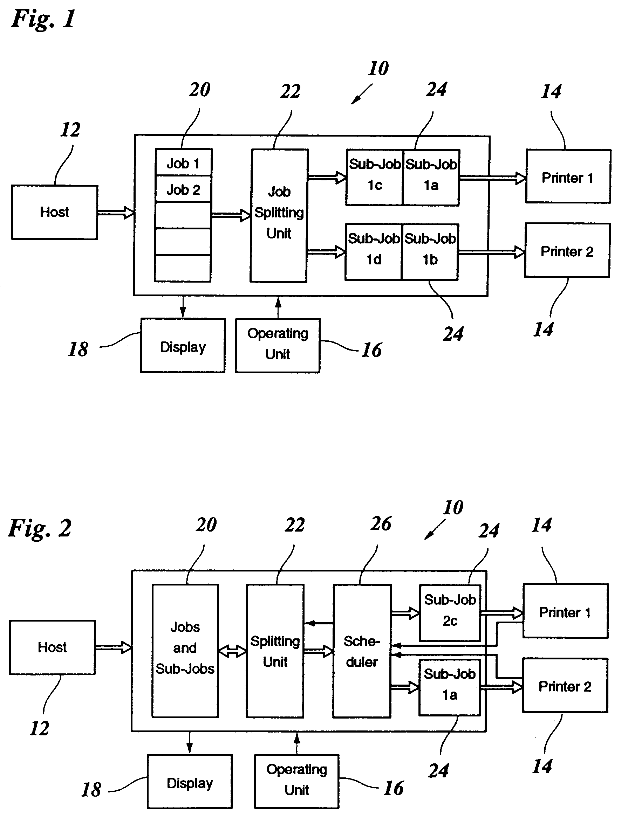

As is shown in Fig. 1, a print server 10 which will generally be formed by an electronic data processing system receives data of jobs to be printed from a host 12 and is connected to a number (two in this example) of print units 14 where the data are printed on recording media, e.g. on paper sheets.

The host 12 may be any suitable data source capable of providing data such as text data or graphic data which are to be printed. For example, the host 12 may be formed by a workstation with text processing facilities, a scanner where hard-copy originals can be scanned-in or a combination of both. The print units 14 may be formed by any known type of print engine such as laser printers, ink jet printers or the like. The invention is particularly useful in conjunction with high-throughput printers which are capable of producing a large number of copies per time unit.

The print server 10 is further connected to an operating unit 16 and to a display 18. The operating unit 16 and the display 18 may be combined with the host 12. However, it is preferable that the operating unit and the display are integrated in a common operating panel which is directly associated with the print server 10, so that the print server may be operated independently of the host from which the data have been received. The operating unit 16 includes an input device of any known type, for example a key-board, an array of input buttons, a mouse or the like. The display 18 will preferably be a CRT screen or an LCD screen capable of displaying variable information. The operating unit 16 may comprise soft keys the function of which depends on the status of the device and is indicated on the display screen.

The print server 10 comprises a memory 20 for storing the job data received from the host 12, a job splitting unit 22 and a plurality of output buffers 24 through which the data are transmitted to the print units 14.

The memory 20 has a sufficient storage capacity for storing a plurality of jobs, each job consisting of the data of a document which may have a large number of pages. Upon commands input via the operating unit 16, the job splitting unit 22 will select one of the jobs stored in the memory 20 and will split this job into a plurality of sub-jobs. In the inter-active mode of the print server the user may designate the sub-jobs for example by inputting a range of page numbers. In order to assist the user in designating the sub-jobs, the contents of the selected job may be displayed on the display 18 either in a symbolic representation or in the form of images of the individual pages at a reduced scale and resolution. In this case, the subdivision between two sub-jobs may be designated for example by means of a mouse and is not restricted to complete pages. For each sub-job, the user may specify the print unit on which this sub-job is to be printed. In accordance with these commands, the job splitting unit 22 transfers the data of the individual sub-jobs into the buffers 24 associated with the designated print unit.

In the example shown in Fig. 1, two jobs designated as "job 1" and "job 2" have been stored in the memory 20, the user has instructed the job splitting unit 22 to split the job 1 into four sub-jobs 1a - 1d, and the first print unit (printer 1) has been designated for the sub-jobs 1a and 1c, and a second print unit (printer 2) has been designated for the sub-jobs 1b and 1d. The job 2 may be subdivided into sub-jobs in a similar manner, although this is not shown in Fig. 1.

When the user has input the desired splitting instructions for the jobs stored in memory 20 and the printing process is started, the job splitting unit 22 will sequentially read the data out of the memory 20 and will route the data of the individual sub-jobs to the appropriate buffers 24 so that the data are printed-out on the designated printer. When the first sub-jobs 1a and 1b in each of the buffers 24 have been printed, the next sub-jobs (of job 1 or job 2) will be loaded into the buffers 24.

It is to be noted that in the inter-active mode the decision how the jobs are subdivided into sub-jobs needs to be taken only at the instant where the jobs are to be printed. Consequently, the person who creates or assembles the jobs in the host 12 does not need to bother whether or not certain parts of the job are to be printed on different print units and even does not need to know how many print units are available. Within the host 12, the whole job can be treated as a single file which greatly facilitates operations like editing, saving a back-up copy and the like.

Fig. 2 shows a modified embodiment in which a scheduler 26 has been added to the print server 10. The scheduler 26 receives status information from the print units 14 and controls the delivery of the individual jobs or sub-jobs to the print units 14 via the buffers 24. If the user has specified the print units where the individual jobs or sub-jobs are to be printed, the operation will be essentially the same as in the embodiment described above. However, if there are certain jobs or sub-jobs for which the user has not designated a specific printer, then the scheduler 26 will route this job or sub-job to the first available and suitable print unit, so that the overall processing time can be shortened.

The format in which the splitting unit 22 sends print requests and/or data for the sub-jobs to the scheduler 26 is identical to the format which is used for complete jobs. Accordingly, the operation of the scheduler 26 is the same as that of conventional schedulers which are known in the art for processing entire jobs.

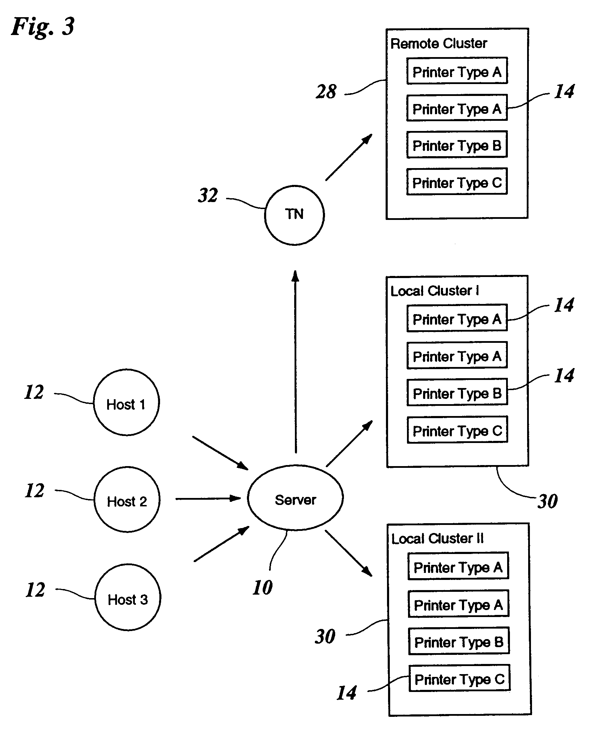

Fig. 3 shows a complex printing system which will illustrate the utility of the invention. Here, a plurality of hosts 12 are connected to the same server 10, and the print units 14 are organized in a plurality of clusters 28, 30 each of which comprises a multiple of print units. The cluster 28 is a remote cluster which is located remote from the server 10 and receives data from the same via a telecommunications network 32. The clusters 30 are local clusters which belong to the same local network (LAN) as the server 10 but may for example be installed on different floors of a building or may belong to different work groups.

In the shown embodiment, the print units 14 are further divided into different types A, B and C, each cluster including printers of each type. As an example, type A could stand for a high-throughput printer whereas type B stands for a high resolution printer and type C stands for a colour printer.

As has been described above, each of the print units 14 in Fig. 3 (twelve print units in total) may be individually designated via the operating unit of the print server 10. However, instead of specifying an individual print unit, it would also be possible to specify that a certain sub-job shall be printed in the remote cluster 28 whereas the selection of the individual print unit within this cluster is left up to the scheduler (optionally, each of the clusters may be provided with its own scheduler). As another alternative, it would also be possible to specify that a sub-job is printed with a print unit of the type B either in any cluster or in a specific cluster.

Thus, generally speaking, instead of designating a specific print unit for an individual sub-job, it is possible within the scope of the invention to designate a certain group of print units, this group being for example a certain cluster of print units or a group of printers belonging to the same type.

If, for example, a document or job comprises multiple pages with coloured text and a few pages with coloured graphics, and a very large number of copies has to be printed, the user may decide that the text pages, although they include coloured text, are printed on a black/white high-throughput printer of type A and only the pages with graphic images, where colour is important, are printed on a colour printer (type C).

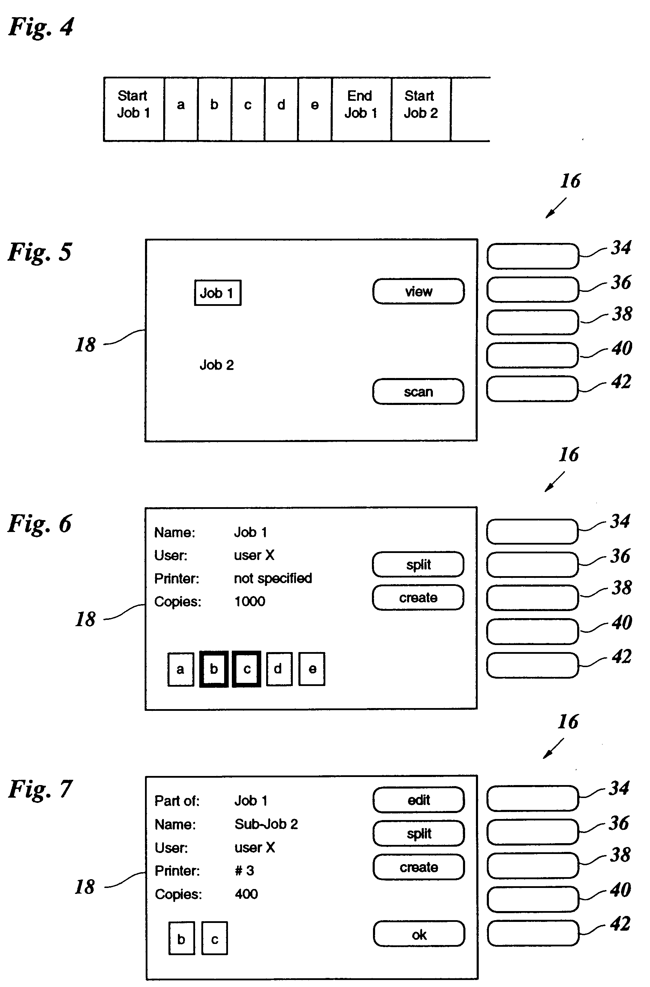

A possible implementation of the procedure for inputting splitting commands will now be explained with reference to Figs. 4 to 11.

Fig. 4 shows a sequence of data which represent the jobs (job 1, job 2, etc.) which have been sequentially received from the host 12 and are stored in the memory 20. In the drawing, the data of the job 1 are represented by data blocks a - e. Each of these blocks may stand for a certain range of pages, an individual page or even a part of a page. The print data for each job, e.g. job 1, are enclosed between a start sequence "start job 1" and a trailer sequence "end job". These sequences inform the print server that the data in-between belong to job 1, and especially the start sequence will generally include additional information or printing instructions, for example, a name for identifying the job, the name or another identification of the user, the number of copies to be printed and optionally a designation of the print unit where the whole job is to be printed.

Also other methods for identifying a job can be used. E.g. "start of file" or "end of file" or a "time out" of the system can be used as separators for different jobs.

Fig. 5 shows a part of the operating unit 16 formed by an array of buttons 34 - 42 which are arranged directly adjacent to the display 18 so that the functions of the individual buttons may be indicated on the display. In the status shown in Fig. 5, the display 18 shows a directory of the jobs which have been stored in the memory 20. By means of a mouse, arrow-buttons (not shown) or the like, the user may select one of the jobs which will then be highlighted on the display. In the shown example, the job 1 has been selected.

When the user then presses the button 36 with the function "view", the display 18 changes to the status shown in Fig. 6. Here, the contents of the start sequence "start job 1" (Fig. 4) are indicated on the display, and the individual entries may be input or changed by the user. In addition, a representation of the print data is displayed in the lower part of the display 18. In this example, it is assumed that the data blocks a - e are individual pages, and images of the five pages corresponding to the blocks a - e are displayed at a reduced scale. The user may then select individual data blocks of the job. In the shown example, the data blocks (pages) b and c have been selected, and the representations of these pages are highlighted by a dark frame on the display.

When the user then enters the command "split" by pressing the button 36, the job 1 will be split into two sub-jobs consisting of the selected pages b and c and the remaining pages a, d and e, respectively. The display 18 changes to the status shown in Fig. 7. The first line of the display indicates that the selected sub-job forms part of the job 1. As the data specifying the name of the user, the designation of a printer and the desired number of copies, the entries from Fig. 6 will be taken-over as default values. These entries may however be changed by the user. In the shown example, the user has entered the number of 400 copies to be made from this sub-job. Further, a specific print unit (#3) has been selected. In place of an identifcation of a specific print unit the user could also have entered the desired cluster-and/or type.

The pages b and c which have been selected in Fig. 6 are indicated in the bottom part of the display in Fig. 7.

The system will further query the user to enter a name for the sub-job, e.g. "sub-job 2".

When all the data have been entered as desired and the user presses the button 42 "ok", the display 18 will show an image similar to Fig. 7 but relating to the remaining part of the original job 1, i.e. the pages a, d and e. The user will be queried to enter a name for this sub-job, e.g. "sub-job 1" and may alter the entries for the name of the user, the designation of the print unit and the number of copies.

Then, the user may select a subset of the remaining pages a, d and e, the page e for example, and may use the button 40 for entering a command "split multiple" which will have the effect that another sub-job (consisting of the page e) will be split-off from the remainder (pages a, d and e), so that the original job 1 will consist of three sub-jobs. This procedure may be continued to divide the original job into a number of sub-jobs as large as desired. On the other hand, if, in the status shown in Fig. 7, the user presses again the button 36 to enter the command "split", then the current sub-job (sub-job 2) will be split further into two sub-jobs on a lower hierarchic level.

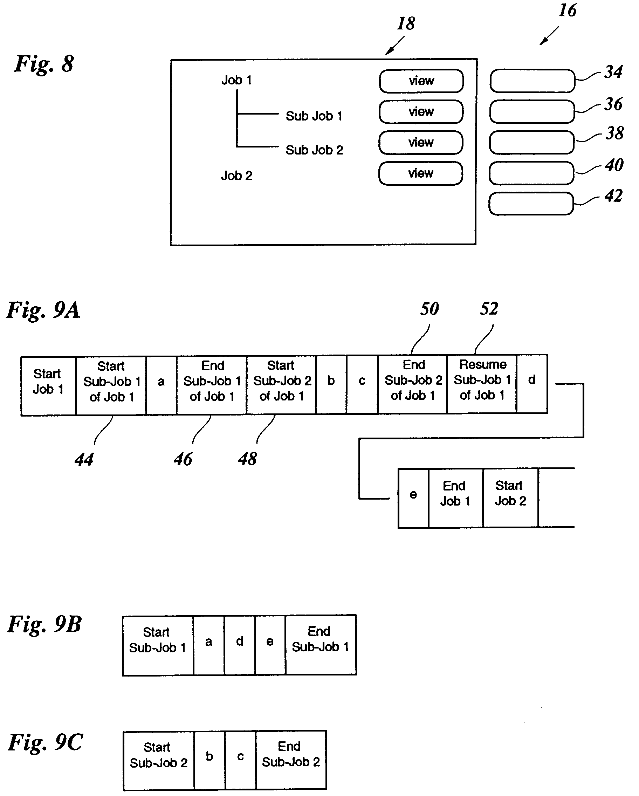

When the original job has been divided in this way and the printing instructions for all sub-jobs on all levels have been entered, the user presses again the button 42 "ok", and a directory indicating the hierarchic tree-structure of jobs and sub-jobs will be displayed, as is shown in Fig. 8. The user may then press one of the buttons 34 - 40 in order to return to the display status shown in Fig. 6 or 7.

Fig. 9A illustrates an efficient way, how the print server 10 can keep track of the splitting commands entered by the user. It is assumed here that the user has split the original job 1 into a sub-job 1 consisting of the pages a, d and e and a sub-job 2 consisting of the pages b and c, as has been described above. In response to a splitting command, the job splitting unit 22 has modified the original data sequence shown in Fig. 4 by inserting additional sub-job separators 44 - 52. The separator 44 is a data sequence which marks the beginning of the first sub-job of job 1 and includes the information pertaining to this sub-job and corresponding to the entries shown in Fig. 7. The separator 46 marks the end of the first sub-job, and the separator 48 marks the beginning of the second sub-job and contains the information pertaining to the sub-job 2, as shown in Fig. 7. The separator 50 marks the end of the sub-job 2, and the separator 52 indicates that the subsequent data blocks (d and e) belong again to the sub-job 1.

When the printing operation is performed, the job splitting unit 22 will read the data sequence shown in Fig. 9A out of the memory 20, exercise the separators 44 - 52 from the data stream, and assemble the data sequences for the two sub-jobs, which are shown in Figs. 9B and 9C and will be delivered to the buffers 24 in accordance with the print units designated by the user.

Normally, it will be desired that the two sub-jobs are printed by different print units. If, for example, the job 1 consists of construction plans for a product having two main components, then the sub-job 1 would comprise the construction plans for one component and the sub-job 2 the construction plans for the other component, and the two sub-jobs would be printed directly at the locations of the work groups responsible for the respective components.

Of course, it is also possible that one and the same print unit is designated for both sub-jobs. Since the sub-jobs will then be printed one after the other, the described system may be used for re-arranging the order of the pages of the job.

If different print units have been selected for the two sub-jobs, and, in the embodiment shown in Fig. 2, the scheduler 26 detects that only one of the printers is currently available, then the data of the sub-job which cannot be printed immediately may be buffered until the designated printer is ready. Alternatively, if the memory space in the buffer is not sufficient, the data sequence according to Fig. 9A may be read twice and each time the data of the sub-job which is not currently being printed will be skipped.

It will be noted that the data sequences of the sub-jobs shown in Fig. 9B and Fig. 9C have the same format as the data sequence for the whole job 1 as shown in Fig. 4, with the only difference that the name of the job and the printing instructions have been replaced by those pertinent to the sub-jobs. Thus, the system components downstream of the job splitting unit 22 can handle the sub-jobs just in the same manner as entire jobs which have not been split.

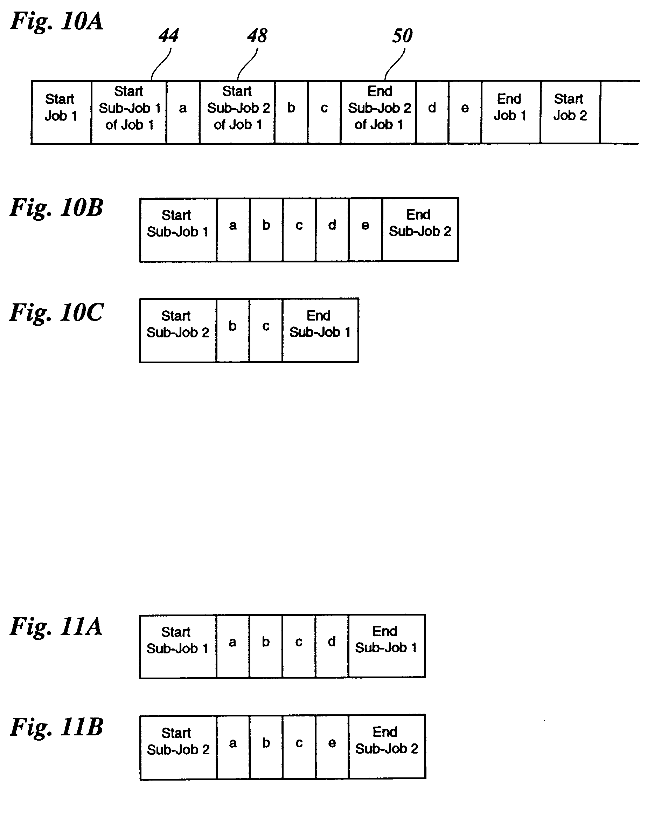

Returning to Fig. 6, the user may enter a command "create" by pressing the button 38. The effect of this command is illustrated in Figs. 10A, 10B and 10C. In this case, the sub-job 2 (Fig. 10C) will be created in a similar manner as in case of the command "split", but the sub-job 1 will in this case consist not only of the remaining pages a, d and e but will be identical to the original job 1 including all the pages a through e, as is shown in Fig. 10B. In the data sequence according to Fig. 10A, this is indicated by the fact that the sub-job separators 48 and 50 for the sub-job 2 are nested within the separators for the sub-job 1 (the separator 46 is not needed here because the end of the sub-job 1 is implicitly indicated by the trailer sequence "end job 1").

As a practical application of the command "create" one might think of a case where a certain number of copies of a document including a summary has to be printed and some extra copies of the summary alone are needed at a different location. Then, the sub-job 1 would comprise the whole document and the sub-job 2 would consist only of the summary.

As is shown in Fig. 7, a command "edit" is available for changing the contents of the selected sub-job. When the corresponding button 34 is pressed, all the data blocks of the complete job will again be shown on the display 18, similarly as in Fig. 6. Then, the user may select additional pages and add them to the selected sub-job, or he may remove certain pages from the sub-job. These operations will have an effect only on the selected sub-job, whereas the other sub-jobs remain unchanged. This function enhances the flexibility in creating or changing a complex structure of sub-jobs.

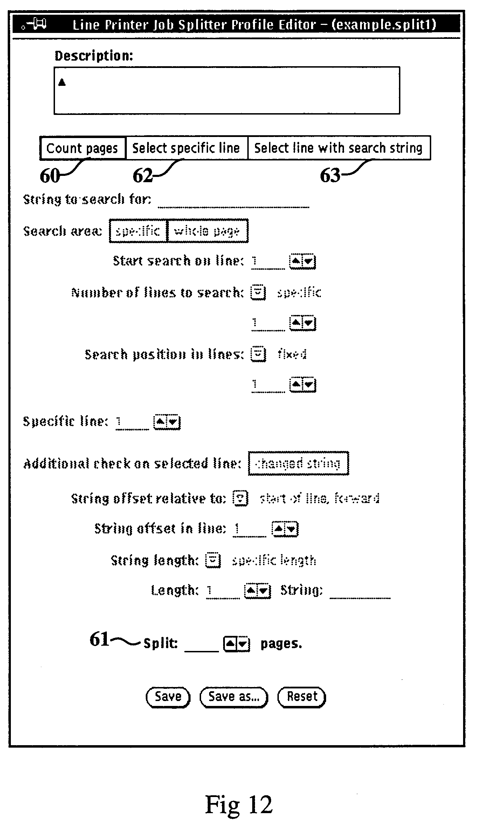

As an example, Figs. 11A and 11B illustrate a case where the sub-job 1 consists of the pages a, b, c and d, whereas the sub-job 2 consists of the pages a, b, c and e, that is to say, both sub-jobs have the pages a, b and c in common. As a practical application, one might think of a brochure which has to be delivered to different district branches and which comprises a text part (pages a, b and c) and an appendix (d or e) which includes data which are pertinent only for the respective district. The job structure according to Figs. 11A and 11B could for example be generated by first creating the sub-job 1 (a - b - c - d) with "create", so that the other sub-job (sub-job 2) will consist of all the pages a through e, and then removing the page d from the sub-job 2.

Many additional functions may be implemented. For example, a command "join" could be provided for combining two selected sub-jobs to a single job or sub-job.

It may also be useful to provide a function which has the effect that the name of the sub-job (as entered in Fig. 7) is automatically printed in the header or footer of each page belonging to this sub-job. In a more elaborated embodiment, additional editing functions may be provided, such as a function "cut" for removing certain areas from each page of the sub-job, these areas being then left blank on the printed copies, or a function "paste" for inserting preselected data in a specified area on each page of the sub-job. Such function may be used for example for providing each page of a sub-job, which is intended for a specific customer, with the logo of this customer.

In the above description, it has been assumed that the commands for splitting the jobs and the printing instructions for the various sub-jobs are manually entered by the user via the operating unit 16. However, it is also possible to operate the print server 10 in a mode in which these commands and instructions are stored in the print server and when data is supplied by host 12 then these commands and instructions are automatically executed on the data from host 12.

In the automatic mode splitting of a job into sub-jobs is performed on the bases of the detection of specific criteria in the data stream from the host. In this mode there is no need to store the complete jobs into the memory of the server. Splitting can be carried out "on the fly".

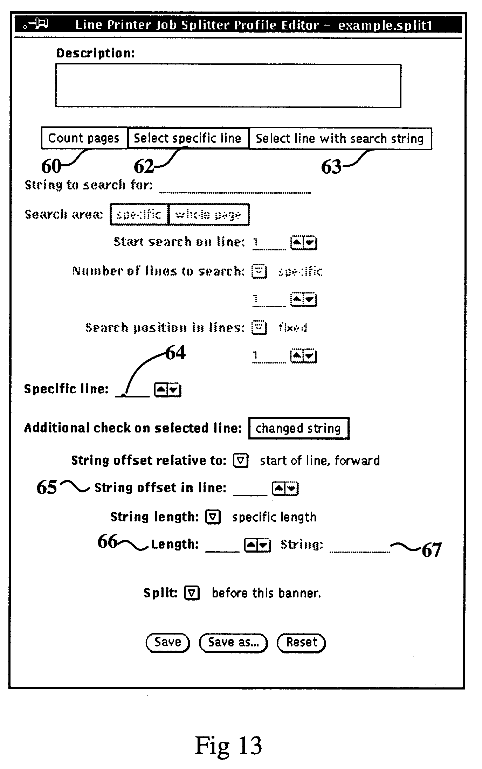

Examples for splitting criteria are explained in conjunction with views of "window" images (Figs. 12-14) displayed on display 18 (Fig. 1).
The text area's in these images can be selected by means of a cursor and activated by inputting commands with inputting unit 16. In each window only the bold printed text area's can be selected.
In Fig. 12 the splitting criterium is the number of pages. By activating the field "count pages" 60, the incoming pages from the host in a job are counted. In field 61 the number of pages can be inputted on which the operator wants the incoming job to be splitted.
By activating field 62 an image according to Fig. 13 is displayed on the screen. In this image a specific line on the incoming pages can be selected by inputting the desired line number in field 64. In this mode the choosen specific line will be searched on each page. A split-point will be found if a string within this line has been changed. This string normally starts at the start of a line. It is also possible to define an offset in this line by an inputting an offset number in field 65. It is further possible to define the length of the string in field 66 or a terminating string can be defined in field 67.
A split condition in this mode occurs if a string on the specified line changes between two consecutive pages.

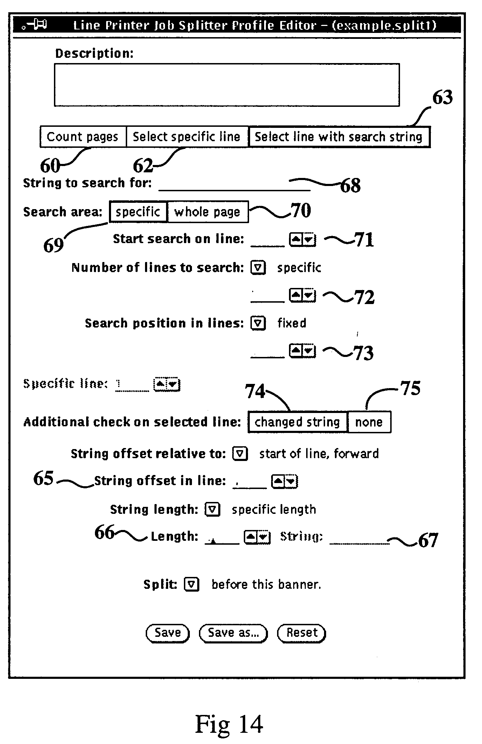

By activating field 63 an image according to Fig. 14 is displayed on display 18. The string to be searched for can be inputted in field 68. By activating field 70 the whole page is searched for occurrence of this string. By activating field 69 the search area can be narrowed by setting a start line number in field 71, the number of lines to be searched after this start line in field 72 and the search position within the lines of the selected area in field 73. Also in this mode an additional check can be carried out on the selected line, by activating field 74 wherein splitting can be carried out on the change of a string as described in relation to Fig. 13. If field 75 is activated, splitting will occur on the occurrence of a specific string defined in field 68 within the area specified.

The job splitting unit 22 comprises in a memory a table wherein the splitting criteria can be stored. This table further comprises identifiers which define the specific printers on which a sub-job has to be printed. The operator can combine a criterium with a specific identifier so that after occurrence of a specific string as explained here before the associated sub-job will be printed out on the selected printers. The operator can put in the identifiers via the operating unit 16.

In a further example of the printing device according to the invention, the jobs inputted from a host in to the print server are splitted into sub-jobs as described here before. However, these sub-jobs are not immediately distributed to the associated printers but for each printer stored in a queue. After all the jobs are splitted in this manner and stored in the associated queues, these queues are sent as a block of data to the respective printers.

While specific embodiments of the invention have been described above, it will be understood that the invention is not limited to these embodiments, but is intended to include all possible modifications or implementations which will occur to a person skilled in the art and which fall within the scope of the appended claims.

## Claims

1. A printing device comprising a print server (10) connected to an operating unit (16) for inputting commands, and a number of print units (14) for printing data, wherein the print server is adapted to receive data of at least one print job supplied from a host (12), characterized in that the operating unit (16) is arranged for inputting commands for splitting the print job into a number of sub-jobs which can individually be supplied to predetermined print units or groups of print units.

2. A printing device according to claim 1, wherein the print server (10) is connected to a display (18) capable of displaying information on the jobs received from the host (12) and on the structure of sub-jobs into which they have been split.

3. A printing device according to claim 1 or 2, wherein the print server (10) includes:
- a memory (20) capable of storing a data sequence comprising print data as well as start sequences and trailer sequences which indicate the start and end of each job and include printing instructions for the respective jobs, and
- means (22) for inserting sub-job separators (44, 46, 48, 50, 52) into the stored data sequence for marking the starting points and end points of each sub-job in accordance with the input commands, said separators including data designating the print unit (14) or the group (28, 30; A, B, C) of print units by which the corresponding sub-job is to be printed.

4. A printing device according to claim 3, wherein the print server (10) is arranged to extract data designating the selected print unit from the start sequence of each job and to route the data of the print job to the designated print unit (14), and wherein a job splitting unit (22) is arranged to detect and excise the sub-job separators (44 - 52) from the data sequence and to transform the data sequence into a plurality of segments which each represent an individual sub-job and have the same format as the original data sequence for the entire job.

5. A method of operating a printing device according to claim 1, comprising the steps of:
- receiving at least one print job from the host (12) and storing it in a memory (20),
- selecting at least one segment (b, c) from among the data (a, b, c, d, e) included in the print job and inputting, via the operating unit 16, a command for splitting the print job into at least two sub-jobs, one of these sub-jobs consisting of the selected segment, and
- designating for at least one of the sub-jobs a print unit (14) where the sub-job is to be printed.

6. A method of operating a printing device according to claim 1, comprising the steps of:
- preparing at least one print job within the host (12), said print job comprising banner pages which separate individual print jobs and at least one banner page (52) separating different sub-jobs within the same print job, said banner pages having a predetermined layout and include at least one data field (56) designating the print unit (14) where the corresponding sub-job is to be printed,
- inputting via said operating unit (16) a command instructing the print server (10) to search input files for banner pages having said predetermined layout and for reading the contents of said at least one data field (56), the characteristics of the predetermined layout being also specified via said operating unit (16), and
- supplying said at least one print job to the print server (10), where the print job is split-up into said sub-jobs in accordance with the detected banner pages (52) and the sub-jobs are sent to the print units designated in said data fields.

7. A print server (10) for a printing system, connected to an operating unit (16) for inputting commands, the print server (10) connected to at least one print unit (14) for printing data, wherein the print server (10) is adapted to receive data of at least one print job supplied from a host (12), characterized in that the print server (10) comprises a job splitting unit (22) that is arranged to detect within the data of one job, criteria on which the data is split up into a number of sub-jobs.

8. A print server (10) according to claim 7, characterized in that the job splitting unit (22) comprises in a memory a table of the criteria, each criterium associated with an identifier that defines the specific printer or printers on which the sub-jobs have to be printed.

9. A printer server (10) according to claims 7 or 8, wherein the print server (10) is coupled to a display (18) capable of displaying information on the job received and on the structure of the sub-jobs into which they have been split.

10. A print server (10) according to claims 7, 8 or 9, wherein the criteria on which the data is to split up can be inputted via the operating unit (16).

11. A print server (10) according to claim 10, wherein the identifiers that define the specific printer or printers on which the sub-jobs have to be printed can be inputted via the operating unit (16).

12. A method of operating a print server (10) according to claim 7, comprising the steps of:
- sending from a host the data of at least one job to the print server (10), the data criteria,
- detecting in the print server (10) the criteria within the data stream of one job,
- splitting up the job into a number of sub-jobs on occurrence of a detected criterium.

13. A method according to claim 12, wherein the criteria in the data are detected at specific positions within the data.

14. A method according to claim 12 or 13, comprising the steps of:
- defining an identifier for a specific printer associated with a criterium,
- sending the data of the sub-job related to the criterium to the specific printer.

15. A method according to claim 12, comprising the steps of:
- splitting up a number of jobs each into a number of sub-jobs,
- storing in a queue all the sub-jobs of all the jobs which are associated with one specific criterium.
